# FASCICULE DE BREVET EUROPEEN

(11) **EP 4 028 455 B1**
(45) Date de publication et mention de la délivrance du brevet: **09.08.2023**
(21) Numéro de dépôt: 20765309.8
(22) Date de dépôt: 08.09.2020
(51) Int. Cl.: C08G 18/76, C08K 5/18

(54) **COMPOSITION COMPORTANT UN POLYOL**
ZUSAMMENSETZUNG MIT EINEM POLYOL
COMPOSITION COMPRISING A POLYOL

(30) Priorité: 09.09.2019 FR 1909870
(43) Date de publication de la demande: 20.07.2022
(73) Titulaire: POLYBRIDGE, 67000 Strasbourg (FR)
(72) Inventeur: XANTHOPOULOS, Pascal, 67000 Strasbourg (FR)
(74) Mandataire: Hege, Frédéric
(86) Numéro de dépôt international: PCT/EP2020/075098
(87) Numéro de publication internationale: WO 2021/048139

(56) Documents cités:
- WO-A1-2018/064521
- JP-A- 2004 222 649
- JP-A- 2012 075 340

## Description

La présente invention se situe dans le domaine des compositions comportant un polyol. Elle concerne plus particulièrement une composition pour la fabrication de polyuréthanes et de mousses polyuréthanes.

Les polyéthers polyols ou les polyols à base d'huile naturelle, sont utilisés pour la production de mousses polyuréthanes. Les polyols comportent en général un additif antioxydant permettant à la fois de minimiser la formation d'hydroperoxides au cours du stockage des polyols et de réduire la coloration au centre des blocs de mousses polyuréthanes.

La formulation des mousses polyuréthanes de faible densité nécessite l'utilisation d'une teneur élevée en eau (agent de moussage), ce qui induit une forte réaction exothermique et des températures élevées de l'ordre de 190°C ou plus pendant plusieurs heures dans le centre de blocs de mousse polyuréthane flexible. Le phénomène exothermique induit une coloration indésirable jaunâtre voire brunâtre, appelée « scorch », dans le centre du bloc de mousse. D'autre part, l'utilisation d'agents ignifugeants dans les formulations de mousses flexibles peuvent aussi conduire à des phénomènes de coloration « scorch » dans le centre des blocs polyuréthanes.

L'additif antioxydant utilisé dans la composition à base de polyol permet de réduire les risques d'apparition de « scorch ».

La composition des additifs antioxydants habituellement utilisés est soit un mélange d'antioxydant phénolique et d'antioxydant de type amine, soit un mélange d'antioxydant phénolique et de lactones. Toutefois, les antioxydants de l'état de la technique ne sont pas entièrement satisfaisants et il y a un besoin croissant de réduire davantage la formation de « scorch » dans le centre des blocs de mousse polyuréthane.

La vitamine E est un antioxydant connu, constitué à au moins 97% d'alpha-tocophérol, et d'autres tocophérols en petites quantités. Ses propriétés « anti-scorch » ne sont pas satisfaisantes.

Le document WO 2018/064521 propose une méthode pour diminuer le "storch" lors de la formation d'une mousse polyuréthane qui comprend l'addition d'un polyéther polyol à une composition comprenant: (A) un composé 2,2,4-triméthyl-1,2-dihydroquinoléine, (B) une lactone, (C) un composé phénolique, (D) un tocophérol, qui peut être indifféremment alpha, beta, gamma, delta et leur mélange. En particulier, de la vitamine E est utilisée dans les exemples de ce document.

Le document US5695689 divulgue également des additifs antioxydants pour les polyols à base d'alpha-tocophérol et/ou de bêta-tocophérol. Les propriétés antioxydantes « anti-scorch » de cette formulation ne sont pas satisfaisantes.

Le document US5218008 divulgue des additifs antioxydants pour les polyols comportant des tocophérols, notamment de l'alpha-tocophérol et d'autres tocophérols en petites quantités. Les propriétés « anti-scorch » de cette formulation ne sont pas satisfaisantes.

Un objet de la présente invention est d'améliorer les propriétés « anti-scorch » des compositions comportant un polyol.

Un autre objet de la présente invention est d'obtenir une composition comportant un polyol sans antioxydant aminé permettant de répondre aux besoins esthétiques et environnementaux, par exemple de l'industrie textile et automobile.

La présente invention a pour objet de répondre au moins en partie aux objets précités en proposant une composition comportant un polyol et dont l'additif antioxydant comporte des tocophérols aux vertus antioxydantes surprenantes. A cet effet, elle propose une composition comportant un polyol et un additif antioxydant, ledit additif antioxydant comportant un antioxydant phénolique et du delta-tocophérol et/ou du gamma-tocophérol, et la somme des teneurs en poids du delta-tocophérol et du gamma-tocophérol dans l'additif antioxydant est supérieure à 5%.

Grâce à ces dispositions, les propriétés « anti-scorch » sont améliorées.

Selon d'autres caractéristiques :
- la somme des teneurs en poids du delta-tocophérol et du gamma-tocophérol dans l'additif antioxydant peut être supérieure à 8%, améliorant encore les propriétés « anti-scorch »,
- ledit additif antioxydant peut comporter un antioxydant de type amine, permettant d'améliorer encore les propriétés « anti-scorch »,
- la teneur en poids de l'antioxydant de type amine peut être inférieure à 0,50%, de préférence inférieure à 0,25%, afin de limiter la coloration en surface des mousses polyuréthanes, ainsi que de réduire les émissions volatiles d'antioxydant de type amine dans l'habitat et dans l'habitacle automobile où elles ne sont pas souhaitées,
- l'additif antioxydant peut comporter de 1 à 4% de alpha-tocophérol, 0 à 1% de bêta-tocophérol, 9 à 13% de gamma-tocophérol et 3 à 7% de delta-tocophérol, ce qui est un mode de réalisation efficace de l'invention et réalisable avec des produits disponibles dans le commerce,
- l'additif antioxydant peut comporter du delta-tocophérol, ce qui est un mode de réalisation efficace de l'invention,
- l'additif antioxydant peut avoir une teneur en poids en delta-tocophérol supérieure à 5%, ce qui est un mode de réalisation particulièrement efficace de l'invention,
- la teneur en poids en additif antioxydant peut être comprise entre 0,01 et 1,5%,de préférence entre 0,35 et 1,0%, ce qui constitue un mode de réalisation efficace de l'invention,
- la somme des teneurs en poids des tocophérols dans l'additif antioxydant peut être comprise entre 5 et 30%, de préférence entre 15 et 30% ce qui constitue un mode de réalisation efficace de l'invention,
- La composition peut comporter une lactone, ce qui peut dans certains cas éviter l'usage d'un antioxydant de type amine tout en conservant de bonnes propriétés antioxydantes.

La présente invention concerne aussi une utilisation d'une composition selon l'invention pour fabriquer une mousse flexible polyuréthane.

Grâce à ces dispositions, la mousse en polyuréthane ainsi obtenue a un risque de « scorch » bien plus faible qu'une mousse obtenue par les procédés habituels de l'état de la technique.

La présente invention sera mieux comprise à la lecture de la description détaillée qui fait suite, en référence aux figures annexées dans lesquelles :

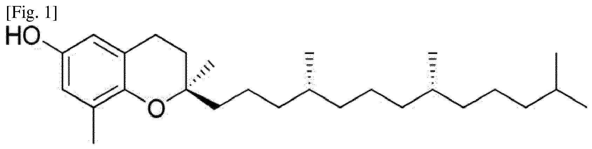

[Fig.1] est une représentation de la structure chimique d'un tocophérol.

La composition selon l'invention comporte un polyol et un additif antioxydant. La composition peut avoir une teneur en poids en additif antioxydant comprise entre 0,01 et 1,5%, de préférence entre 0,35 et 1%.

Le polyol peut être un polyéther polyol, obtenu soit avec un catalyseur KOH, soit avec un catalyseur « DMC » (double métal cyanide), soit avec un catalyseur « CO2 » (on obtient alors un polyéther-carbonate polyol). Alternativement, le polyol peut être un polyol dérivé d'huile naturelle, aussi appelé « NOP » (natural oil polyol), par exemple de l'huile de soja, huile de palme, huile de ricin, huile de canola ou huile de tournesol. Un polyol « NOP » bio-sourcé, peut être préféré pour des raisons environnementales.

Les additifs antioxydants comprennent un antioxydant phénolique et du delta-tocophérol et/ou du gamma-tocophérol. La somme des teneurs en poids du delta-tocophérol et du gamma-tocophérol dans l'additif antioxydant est supérieure à 5%. Dans un mode de réalisation préféré de l'invention, la somme des teneurs en poids du delta-tocophérol et du gamma-tocophérol dans l'additif antioxydant est supérieure à 8%.

La structure chimique du delta-tocophérol est représentée en fig. 1.

L'additif antioxydant peut comprendre d'autres tocophérols, tel que de l'alpha-tocophérol et/ou du bêta-tocophérol.

Dans un mode de réalisation particulier, la somme des teneurs en poids de tous les tocophérols dans l'additif antioxydant peut être comprise entre 5 et 30%, de préférence entre 15 et 30%.

L'antioxydant phénolique peut être n'importe quel composé phénolique, c'est-à-dire un composé qui a un groupe OH libre attaché à un noyau phényle, apte à être un antioxydant. Tel qu'utilisé ici, le terme « antioxydant phénolique » comprend également les composés où le groupe OH est fixé à un noyau phényle, dans lequel le noyau phényle fait partie d'une structure cyclique fusionnée, par exemple, le noyau phényle fait partie d'un noyau benzothiophène, d'un noyau naphtalène, d'un noyau indolique, d'un noyau benzofuranne ou similaire. Les antioxydants phénoliques préférés sont les phénols encombrés (par exemple, avec au moins l'une des deux positions ortho du groupe phénolique OH substitué, par exemple, par un groupe alkyle tel qu'un groupe méthyle, éthyle, propyle, cyclopropyle, isopropyle, butyle, isobutyle ou tert-butyle) et les phénols dimères.

L'antioxydant phénolique peut donc être constitué d'un phénol encombré ou d'un mélange de plusieurs phénols encombrés, choisis parmi le 2,6-di-tert-butyl-4-méthylphénol, le 2-butyl-4,6-diméthylphénol, le 2,6-di-tert-butyl-4-éthylphénol, le 2,6-di-tert-butyl-4-n-butylphénol, le 2,6-di-tert-butyl-4-isobutylphénol, le 2,6-dicyclopentyl-4-méthylphénol, le 2-(α-méthylcyclohexyl)-4,6-diméthylphénol, le 2,6-dioctadécyl-4-méthylphénol, le 2,4,6-tricyclohexylphénol, le 2,6-di-tert-butyl-4-méthoxyméthylphénol, le 2,6-dinonyl-4-méthylphénol, le 2,4-diméthyl-6-(1'-méthyl-undec-1'-yl)-phénol, le 2,4-diméthyl-6-(1'-méthylheptadec-1'-yl)-phénol, le 2,4-diméthyl-6-(1'-méthyltridec-1'-yl)-phénol, le 2,4-diotylthiométhyl-6-tert-butylphénol, le 2,4-diotylthiométhyl-6-méthylphénol, le 2,4-diotylthiométhyl-6-éthylphénol, et le 2,6-didodécylthiométhyl-4-nonylphénol, la transestérification de l'ester méthylique de l'acide 3-(3,5-di-tert-butyl-4-hydroxyphényl)-propionique avec le « PEG 200 » (polyéthylèneglycol de masse molaire 200).

L'additif antioxydant peut comprendre un antioxydant de type amine. La teneur en poids de l'antioxydant de type amine dans la composition peut être inférieure à 0,50%, de préférence inférieure à 0,25%. Une valeur faible de l'amine permet de conférer une bonne stabilité couleur des mousses polyuréthanes après exposition aux UV ou aux oxydes d'azote. L'antioxydant de type amine peut être une amine aromatique.

L'amine aromatique est un composé qui a un groupe amine, que ce soit un groupe amine libre (par exemple, NH2), ou un groupe amine substitué (par exemple, NR1R2, où R1 et R2 sont indépendamment hydrogène, alkyle, arylalkyle, hétéroarylalkyle, cycloalkylalkyle, hétérocyclocycloalkyle, hétérocyclocycloalkyle, arylcycloalkyle, arylcycloalkyle, hétéroarylcycloalkyle, arylhétérocycloalkyle, hétéroarylhétérocycloalkyle, hétéroarylhétérocycloalkyle, cycloalkyle, arylcycloalkyle, hétéroarylcycloalkyle, hétéroarylcycloalkyle, hétérocycloalkyle, arylhétérocycloalkyle, alcényle, arylalcényle, cycloalcényle, arylcycloalcène, hétéroarylcycloalcényle, hétérocycloalcényle, hétérocycloalcényle, arylhétérocycloalcényle, hétéroarylhétérocycloalcényle, hétéroarylhétéroalcényle, alcynyle, arylalcynyle, aryle, cycloalkylaryle, hétérocycloalkylaryle, cycloalcénylaryle, hétérocycloalcényle, hétéroaryle, cycloalkylhétéroaryle, hétéroalkylhétéroaryle, cycloalcénylhétéroaryle ou hétérocycloalcénylhétéroaryle), directement attaché à un noyau aromatique, tel qu'un cycle aromatique monocyclique (par exemple un cycle phényle, ou un cycle hétéroaromatique monocyclique tel qu'un cycle thiophène, un cycle pyridine, un cycle pyrimidine, un cycle furanne, un cycle pyrazine, un cycle pyridazine, un cycle triazine), ou un cycle aromatique polycyclique (par exemple un cycle aromatique bicyclique tel qu'un cycle naphtalène, ou un cycle hétéroaromatique bicyclique tel qu'un cycle indole, un cycle benzofuranne, un cycle benzoimidazole ou un cycle benzothiophène, etc. ou un cycle aromatique tricyclique tel qu'un carbazole).

L'antioxydant de type amine peut être une amine aromatique, dans lequel le groupe amine est lié à deux cycles aromatiques, tels que deux cycles aromatiques monocycliques (par exemple, comme décrit ici) qui sont identiques ou différents, deux cycles aromatiques polycycliques (par exemple, comme décrit ici) qui sont identiques ou différents, ou un cycle aromatique monocyclique (par exemple, comme décrit ici) et un cycle aromatique polycyclique (par exemple, comme décrit ici). L'antioxydant de type amine peut être une diphénylamine. L'antioxydant de type amine peut encore être une amine aromatique ayant le groupe amine attaché à un cycle aromatique monocyclique (par exemple, un cycle phényle) et un cycle aromatique polycyclique (par exemple, un cycle naphtalène). L'antioxydant de type amine peut être choisi dans le groupe constitué de dinonyl diphenylamine, butylated, octylated diphenylamine, dioctyl diphenylamine, N,N'-diisopropyl-p-phénylènediamine, N,N'-di- sec-butyl-p-phénylènediamine, N,N'-bis(1,4-dimethylpentyl)-p-phénylènediamine, N,N'-bis(1-éthyl-3-méthylpentyl)-p-phénylènediamine, N,N'-bis(1-méthylheptyl)-p-phénylènediamine, N,N'-dicyclohexyl-p-phénylènediamine, N,N'-diphényl-p-phénylènediamine, N,N'-di(naphth-2-yl)-p-phénylènediamine, N-isopropyl-N'-phényl-p-phénylènediamine, N-(1,3-diméthylbutyl)-N'-phényl-p-phénylènediamine, N-(1-méthylheptyl)-N'-phényl-p-phénylènediamine, N-cyclohexyl-N'-phényl-N'-phényl-p-phénylènediamine, 4-(p-toluènesulfonamido)-diphénylamine, N,N'-diméthyl-N,N'-di-sec-butyl-p-phénylènediamine, diphénylamine, diphényl amine styrène (CAS n° 68442-68-2), N-allyldiphénylamine, 4-isopropoxydiphénylamine, di(4-méthoxyphényl)amine, 2,4'-diaminodiphénylméthane, 4,4'-diaminodiphénylméthane, N,N,N',N'-tétraméthyl-4,4'-diaminodiphénylméthane, 1,2-di[(2-méthylphényl)amino]-éthane, 1,2-di(phénylamino)propane, (o-tolyl)biguanide, di[4-(1',3'-diméthylbutyl)phényl] amine, N-phényl-1-naphthylamine tert-octylée, phényl-1- naphtylamine amine p,p'-dioctyldiphényl, mélange de tert-butyl-diphénylamines tert-butylées/tert-octylées mono- et di-alkylées, mélange de no-nyldiphénylamines mono- et di-alkylées, mélange de dodécyldiphénylamines mono- et di-alkylées, mélange de isopropyl/isohexyl-diphénylamines mono- et di-alkylées, mélanges de tert-butyldiphénylamines mono- et di-alkylées, 2,3-dihydro-3,3-diméthyl-4H-1,4-benzothiazine, phénothiazine, mélange de tert-butyl/tert-octyl-phénothiazines mono- et di-alkylées, mélanges de tert-octylphénothiazines mono- et di-alkylées, N-allylphénothiazine et N,N,N',N'-tetraphényl-1,4-diaminobut-2-ène.

En alternative à l'antioxydant de type amine ou en complément de celui-ci, la composition selon l'invention peut comporter une lactone. La lactone peut être un composé de la famille des benzofuranones et indolinones, par exemple choisi dans le groupe constitué de 3 -[4-(2-acetoxyethoxy)phenyl]-5-7-di-tert-butylbenZofuran-2-one, 5,7-di-tert-butyl-3-[4-(2-stearoyloxy-ethoxy)phenyl]benZofuran-2-one, 3,3'-bis[5,7-di-tert-butyl-3-(4-[2-hydroxyethoxy]phenyl)benZofuran-2-one], 5,7-di-tert-butyl-3-(4-ethoxyphenyl)benZofuran-2-one, 3-(4-acetoxy-3,5-dimethylphenyl)-5,7-di-tert-butylbenZofuran-2-one, 3-(3,5-dimethyl-4-pivaloyloxyphenyl)-5,7-di-tert butylbenZofuran-2-one, 3-(3,4-dimethylphenyl)-5-7-di-tert butylbenZofuran-2-one, 3-(2,3-dimethylphenyl)-5,7-di-tert-butylbenZofuran-2-one, 3-(2-acetyl-5-isooctylphenyl)-5-isooctylbenZofuran-2-one, ou une lactone polymérique ou oligomérique tels que 3-arylbenzofuranones à chaîne(s) poly(oxyalkylène) substituée(s) ou 3-arylbenzofuranones à chaîne(s) poly(caprolactone) substituée(s).

Exemple de composition d'un antioxydant l'invention :
- antioxydant phénolique,
- 1 à 4 % d'alpha-tocophérol,
- 0 à 1 % de bêta-tocophérol,
- 9 à 13 % de gamma-tocophérol,
- 3 à 7% de delta-tocophérol.

Dans un mode préféré de réalisation de l'invention, l'additif antioxydant comporte du delta-tocophérol, de préférence la teneur en poids de l'additif antioxydant en delta-tocophérol est supérieure à 5%.

L'additif antioxydant peut présenter un rapport des teneurs en poids de l'antioxydant de type amine à l'antioxydant phénolique compris entre 0 et 1,2. Dans un mode de réalisation préféré, le rapport des teneurs en poids de l'antioxydant de type amine à l'antioxydant phénolique est inférieur à 0,9, de préférence inférieur à 0,8. En effet l'antioxydant de type amine peut induire une coloration indésirable à la surface des mousses polyuréthanes après exposition aux UV ou aux oxydes d'azote (phénomène appelé « gas fading ») ; il est donc avantageux de réduire la part d'amine dans l'additif antioxydant. Cette réduction est possible par la présence de tocophérols de type gamma- ou delta-tocophérol, qui permettent d'obtenir de bonnes performances antioxydantes tout en réduisant la part d'antioxydant de type amine.

La composition selon l'invention peut encore comprendre un ou plusieurs produits supplémentaires choisis dans le groupe constitué par un agent ignifugeant, un absorbeur UV, un désactivateur de métaux, un stabilisant lumière du type « HALS » (hindered amine light stabilizer), un plastifiant, un lubrifiant, un émulsifiant, un pigment, un catalyseur, un additif de rhéologie, un agent de moussage, un additif antistatique.

### Exemples

La composition selon l'invention ainsi que des compositions de l'état de la technique ont été testées en termes de performance de coloration « scorch », seule la composition de l'additif antioxydant variant. Les tests ont consisté en une irradiation par micro-ondes de petites mousses à faible densité produites au laboratoire en utilisant un four à micro-ondes. Les mousses de densité 22 et 45 kg/m ³ sont préparées à partir des formulations détaillées dans le Tableau 1 ci-dessous. Lorsque la température au centre du bloc des mousses a atteint un maximum, le bloc de mousse est transféré dans la chambre du four à micro-ondes, irradié pendant différentes durées et le pic de température au centre du bloc de la mousse est mesuré. Enfin, le bloc de mousse est complètement polymérisé dans un four à 90°C pendant 30 minutes. Deux mesures sont ensuite effectuées :
- test 1 : après refroidissement, la différence de couleur (delta E) entre le centre de la mousse et ses bords est mesurée à l'aide d'un colorimètre.
- test 2 : des échantillons de mousse sont ensuite irradiés dans des équipements de type « Weatherometer » afin de subir un test de vieillissement. Le changement de couleur (delta E) entre l'échantillon de mousse avant irradiation (t=0) et après 8 heures d'irradiation aux UV est mesuré par colorimètre.

Le tableau 1 ci-dessous présente les deux compositions de mousses polyuréthane testées, de densités 22 et 45 kg/m ³. La teneur en poids de chaque composant est indiquée, rapportée à une teneur de 100 pour le polyéther polyol.

**[Tableaux 1]**

| | Mousse 22 kg/m ³ | Mousse 45 kg/m ³ |
|---|---|---|
| Polyéther polyol (Copolymère séquencé à base de glycérine sur oxyde d'éthylène et oxyde de propylène, 3600 g/mol - Rokopol (marque déposée) F3600) | 100 | 100 |
| tensioactif siliconé | 1,2 | 0,65 |
| catalyseur amine | 0,4 | 0,2 |
| catalyseur étain | 0,5 | 0,28 |
| Eau | 5 | 2,6 |
| additif antioxydant | 0,5 | 0,5 |
| diisocyanate de toluène (TDI) | 60 | 35 |

Les antioxydants utilisés sont l'AO 1135, l'AO 5057, une lactone, l'alpha-tocophérol, et un produit comprenant des tocophérols selon l'invention, sous la référence VB T70.

L'AO 1135 est un antioxydant phénolique de composition : acide benzopropanoïque, 3,5-bis(1,1-diméthyl-1,1-diméthyléthyl)-4-hydroxy-, esters alkyliques ramifiés en C7-9.

L'AO 5057 est un antioxydant de type amine, de composition : benzenamine,N-phényl-, produits de réaction avec le 2,4,4-triméthylpentène.

Le "PDDP" est un phényldiisodécylphosphite.

La lactone est la 3-(2-acétyl-5-isooctylphényl)-5 isooctylbenZofuran-2-one.

Le VB T70 est un mélange d'antioxydants et d'huile de tournesol, de composition :
- 30% d'huile de tournesol
- 70% de tocophérols, parmi lesquels se trouvent :
   - 9 à 20 % d'alpha-tocophérol,
   - 1 à 4 % de bêta-tocophérol,
   - 50 à 65 % de gamma-tocophérol,
   - 20 à 35 % de delta-tocophérol.

La vitamine E utilisée comporte :
- 32 à 59% d'alpha-tocophérol,
- 0 à 2% de bêta-tocophérol,
- 1 à 4% de gamma-tocophérol,
- 0 à 1% de delta-tocophérol,
- le reste d'huile de tournesol.

Compositions comparatives (A-D,F,G,K,L) et selon l'invention (E,H,I,J):
- additif antioxydant A :
   - 0,35% AO 1135
   - 0,15% AO 5057
- additif antioxydant B :
   - 0,27% AO 1135
   - 0,13% AO 5057
   - 0,1% alpha-tocophérol
- additif antioxydant C :
   - 0,25% AO 5057
   - 0,25% alpha-tocophérol
- additif antioxydant D :
   - 0,30% AO 1135
   - 0,05% AO-5057
   - 0,05% PDDP
   - 0,1% alpha-tocophérol
- additif antioxydant E :
   - 0,24% AO 1135
   - 0,12% AO 5057
   - 0,14% VB T70
- additif antioxydant F :
   - 0,4% AO 1135
   - 0,1% lactone
- additif antioxydant G :
   - 0,36% AO 1135
   - 0,14% alpha-tocophérol
- additif antioxydant H :
   - 0,36% AO 1135
   - 0,14% VB T70
- additif antioxydant I :
   - 0,40% AO 1135
   - 0,1% gamma-tocopherol
- additif antioxydant J :
   - 0,40% AO 1135
   - 0,1% delta-tocopherol
- additif antioxydant K :
   - 0,27% AO 1135
   - 0,13% AO 5057
   - 0,1% vitamine E
- additif antioxydant L :
   - 0,36% AO 1135
   - 0,14% vitamine E

Les résultats des tests sont repris dans les tableaux 2 et 3 ci-dessous.
- Tableau 2 : test 1 : delta E entre le centre du bloc et ses bords après refroidissement de la mousse.

**[Tableaux2]**

| | Delta E, mousse 22 kg/m ³ | Delta E, mousse 45 kg/m ³ |
|---|---|---|
| Température mesurée au centre du bloc | 193°C | 180°C |
| Additif antioxydant A | 16 | 4 |
| Additif antioxydant B | 15 | 4 |
| Addtif antioxydant C | 18 | 4 |
| Additif antioxydant D | 20 | 5 |
| Additif antioxydant E | 10 | 3 |
| Additif antioxydant F | 25 | 5 |
| Additif antioxydant G | 23 | 5 |
| Additif antioxydant H | 19 | 4 |
| Additif antioxydant I | 18 | 4 |
| Additif antioxydant J | 17 | 4 |
| Additif antioxydant K | 14 | 4 |
| Additif antioxydant L | 22 | 5 |

L'effet « anti-scorch » des tocophérols selon l'invention, présent dans les additifs antioxydants I (gamma-tocophérol) et J (delta-tocophérol), et dans les additifs antioxydants E et H par l'intermédiaire du produit VB T70, est apparent dans les mousses de densité 45 kg/m ³, mais il est particulièrement remarquable dans les mousses de polyuréthanes de faible densité 22 kg/m ³ dans le centre desquelles les températures peuvent avoisiner les 190-195°C. Ces résultats montrent donc que la présence de tocophérols de type gamma- et/ou delta-tocophérol améliore les performances « anti-scorch ».

Parmi les additifs antioxydants comportant un antioxydant de type amine (A, B,C, D, E et K), l'additif E est plus efficace que l'additif A, sans tocophérol, qui est l'état de l'art le plus répandu sur le marché, et les additifs B, C et D, qui ne comportent que des alpha-tocophérols. L'additif E est aussi plus efficace que l'additif K, qui comporte peu de bêta, gamma et delta-tocophérol. On conclut donc qu'en présence d'antioxydant de type amine, la présence d'une certaine quantité de tocophérols de type gamma ou delta-tocophérol permet d'obtenir des meilleures performances que l'utilisation exclusive ou très majoritaire d'alpha-tocophérol.

Parmi les additifs antioxydants ne comportant pas d'antioxydant de type amine (F, G et H, I, J et L), les additifs H, I et J est plus efficace que l'additif F, sans tocophérol, qui comporte une lactone, et l'additif G, qui ne comporte que des alpha-tocophérols. Les additifs H, I et J sont aussi plus efficaces que l'additif L, qui comporte peu de bêta, gamma et delta-tocophérol. On conclut donc que les tocophérols de type gamma ou delta-tocophérol permettent d'obtenir des meilleures performances que l'utilisation exclusive ou très majoritaire d'alpha-tocophérol, qu'un antioxydant de type amine soit présent ou non.

La faible performance « anti-scorch » de l'additif antioxydant G à base d'un antioxydant phénolique et d'alpha tocophérol montre que l'alpha-tocophérol n'a pas d'effet booster, contrairement aux additifs antioxydants I et J à base de, gamma et delta tocophérols respectivement.

Finalement les résultats du Tableau 2 montrent que les additifs antioxydants selon l'invention sans amine (H, I et J) permettent d'obtenir des performances proches des additifs antioxydants aminés de l'état de la technique. Les compositions selon l'invention permettent donc d'avoir des performances « anti-scorch » améliorées tout en permettant de réduire, non seulement les émissions volatiles contenant des antioxydants de type amine, mais encore le risque de coloration en surface des mousses polyuréthanes dues à ces mêmes antioxydants aminés. Ceci est montré ci-dessous par les résultats du test 2.
- Tableau 3 : test 2 : variation de coloration DELTA E en surface des mousses polyuréthanes entre avant et après irradiation aux UV de l'échantillon de mousse.

**[Tableaux3]**

| | Delta E, mousse 22 kg/m ³ |
|---|---|
| Additif antioxydant A | 18 |
| Additif antioxydant B | 17 |
| Additif antioxydant C | 21 |
| Additif antioxydant D | 13 |
| Additif antioxidant E | 17 |
| Additif antioxydant F | 11 |
| Additif antioxydant G | 11 |
| Additif antioxydant H | 11 |
| Additif antioxydant I | 11 |
| Additif antioxydant J | 11 |
| Additif antioxydant K | 17 |
| Additif antioxydant L | 11 |

Lors du test de vieillissement, les compositions A, B, C, D, E et K comportant un antioxydant de type amine, ont de moins bons résultats que les compositions F, G, H, I, J et L, qui ne comportent pas d'antioxydant de type amine. Il est ainsi préférable de ne pas mettre d'antioxydant de type amine lorsqu'on veut éviter les problèmes de coloration en surface des mousses lorsqu'elles sont exposées à la lumière.

On observe toutefois que la composition E présente de meilleurs résultats que les compositions A et C, démontrant que l'ajout de tocophérols de type gamma ou delta selon l'invention permet d'améliorer les résultats en permettant de baisser le taux d'antioxydant de type amine.

Finalement, les deux tests effectués montrent que le choix de l'additif antioxydant optimal dépend des applications. Les meilleurs résultats sont obtenus pour les composition selon l'invention, comportant notamment des tocophérols de type gamma ou delta-tocophérol, ou gamma et delta-tocophérol par le produit VB-T70. Mais il faut encore choisir entre la composition E, comportant un antioxydant de type amine, et l'une des compositions H, I et J, qui n'en comportent pas.

Dans le cas des mousses polyuréthanes de faible densité, par exemple inférieure ou égale à 30 kg/m ³, utilisées par exemple pour des applications d'ameublement, ou dans les matelas, il peut être préférable que l'additif comporte un antioxydant de type amine. En effet comme on le voit dans le Tableau 1, plus la densité de la mousse est faible, plus le phénomène de « scorch » peut être sévère. Or comme le montrent les résultats du Tableau 1, les compositions à base d'antioxydant de type amine sont essentielles pour conférer la meilleure protection « anti-scorch » possible.

Dans le cas des mousses polyuréthanes de densité plus importante, par exemple supérieure à 30 kg/m ³, utilisées par exemple pour des applications automobiles (sièges automobiles, garnitures de toits automobile), dans les bonnets de soutien-gorge, ou encore dans les épaulières matelassées, il peut être préférable que l'additif ne comporte pas d'antioxydant de type amine. En effet dans le cas d'applications pour lesquelles l'aspect esthétique est important, par exemple les bonnets de soutien-gorge ou les épaulières matelassées, on cherche à utiliser des mousses polyuréthanes qui ne changent pas de couleur après exposition à la lumière ; comme l'indique les résultats du Tableau 3, il est donc préférable d'utiliser un additif antioxydant sans antioxydant de type amine. Un autre avantage procuré par un additif antioxydant sans amine, recherché par exemple pour les mousses automobiles et les mousses d'ameublement, est d'éviter les émissions de « VOC » (Volatile Organic Compounds) comportant des amines à éviter dans les habitacles automobiles et dans l'habitat.

Enfin pour les mousses polyuréthane de densité plus importante, par exemple supérieure à 30 kg/m ³, les additifs antioxydants doivent toujours conférer une protection « anti-scorch », mais le phénomène de « scorch » est moins sévère. Une composition sans antioxydant de type amine peut donc convenir.

L'invention s'applique donc à toutes sortes de densité de mousses polyuréthane, et en particulier pour des densités inférieures ou égales à 45 kg/m ³. L'invention est particulièrement pertinente pour des densités inférieures à 30 kg/m ³.

Bien que la description ci-dessus se base sur des modes de réalisation particuliers, elle n'est nullement limitative de la portée de l'invention, et des modifications peuvent être apportées, notamment par substitution d'équivalents techniques ou par combinaison différente de tout ou partie des caractéristiques développées ci-dessus.

## Revendications

1. Composition comportant un polyéther polyol ou un polyol dérivé d'huile naturelle, et un additif antioxydant, ledit additif antioxydant comportant un antioxydant phénolique et du delta-tocophérol et/ou du gamma-tocophérol, et la somme des teneurs en poids du delta-tocophérol et du gamma-tocophérol dans l'additif antioxydant est supérieure à 5%.

2. Composition selon la revendication précédente, dans laquelle la somme des teneurs en poids du delta-tocophérol et du gamma-tocophérol dans l'additif antioxydant est supérieure à 8%.

3. Composition selon l'une des revendications précédentes, dans laquelle ledit additif antioxydant comporte un antioxydant de type amine.

4. Composition selon la revendication précédente, dans laquelle la teneur en poids de l'antioxydant de type amine est inférieure à 0,50%, de préférence inférieure à 0,25%.

5. Composition selon la revendication précédente, dans laquelle l'additif antioxydant comporte de 1 à 4% de alpha-tocophérol, 0 à 1% de bêta-tocophérol, 9 à 13% de gamma-tocophérol et 3 à 7% de delta-tocophérol.

6. Composition selon l'une des revendications 1 à 4, dans laquelle l'additif antioxydant comporte du delta-tocophérol, de préférence l'additif antioxydant a une teneur en poids en delta-tocophérol supérieure à 5%.

7. Composition selon l'une des revendications précédentes, dans laquelle la teneur en poids en additif antioxydant est comprise entre 0,01 et 1,5%, de préférence entre 0,35 et 1,0%.

8. Composition selon l'une des revendications précédentes, dans laquelle la somme des teneurs en poids des tocophérols dans l'additif antioxydant est comprise entre 5 et 30%, de préférence entre 15 et 30%.

9. Composition selon l'une des revendications précédentes comportant une lactone.

10. Utilisation d'une composition selon l'une des revendications précédentes pour fabriquer une mousse flexible polyuréthane.

## Patentansprüche

1. Zusammensetzung, umfassend ein Polyetherpolyol oder ein von einem natürlichen Öl abgeleitetes Polyol und ein Antioxidationsadditiv, wobei das Antioxidationsadditiv ein phenolisches Antioxidationsmittel und delta-Tocopherol und/oder gamma-Tocopherol umfasst und die Summe der Gewichtsgehalte von delta-Tocopherol und gamma-Tocopherol in dem Antioxidationsadditiv mehr als 5 % beträgt.

2. Zusammensetzung nach dem vorhergehenden Anspruch, wobei die Summe der Gewichtsgehalte von delta-Tocopherol und gamma-Tocopherol in dem antioxidativen Zusatzstoff größer als 8 % ist.

3. Zusammensetzung nach einem der vorhergehenden Ansprüche, wobei das Antioxidationsadditiv ein Amin-Antioxidant umfasst.

4. Zusammensetzung nach dem vorhergehenden Anspruch, wobei der Gewichtsgehalt des Amin-Antioxidant weniger als 0,50 %, vorzugsweise weniger als 0,25 %, beträgt.

5. Zusammensetzung nach dem vorhergehenden Anspruch, wobei der Antioxidationsadditiv 1 bis 4 % alpha-Tocopherol, 0 bis 1 % beta-Tocopherol, 9 bis 13 % gamma-Tocopherol und 3 bis 7 % delta-Tocopherol enthält.

6. Zusammensetzung nach einem der Ansprüche 1 bis 4, wobei der Antioxidationsadditiv delta-Tocopherol umfasst, vorzugsweise hat der Antioxidationsadditiv einen Gehalt an delta-Tocopherol von mehr als 5 Gew.-%.

7. Zusammensetzung nach einem der vorhergehenden Ansprüche, wobei der Gewichtsgehalt des Antioxidationsadditiv zwischen 0,01 und 1,5 %, vorzugsweise zwischen 0,35 und 1,0 % liegt.

8. Zusammensetzung nach einem der vorhergehenden Ansprüche, wobei die Summe der Gewichtsgehalte der Tocopherole im Antioxidationsadditiv zwischen 5 und 30 %, vorzugsweise zwischen 15 und 30 %, liegt.

9. Zusammensetzung nach einem der vorhergehenden Ansprüche, die ein Lacton enthält.

10. Verwendung einer Zusammensetzung nach einem der vorhergehenden Ansprüche zur Herstellung eines Polyurethan-Weichschaums.

## Claims

1. A composition comprising a polyether polyol or a polyol derived from natural oil, and an antioxidant additive, said antioxidant additive comprising a phenolic antioxidant and delta-tocopherol and/or gamma-tocopherol, and the sum of the contents by weight of delta-tocopherol and gamma-tocopherol in the antioxidant additive is greater than 5%.

2. Composition according to the preceding claim, wherein the sum of the contents by weight of delta-tocopherol and gamma-tocopherol in the antioxidant additive is greater than 8%.

3. A composition according to any of the preceding claims, wherein said antioxidant additive comprises an amine-type antioxidant.

4. Composition according to the preceding claim, wherein the content by weight of the amine-type antioxidant is less than 0.50%, preferably less than 0.25%.

5. A composition according to the preceding claim, wherein the antioxidant additive comprises from 1 to 4% alpha-tocopherol, 0 to 1% beta-tocopherol, 9 to 13% gamma-tocopherol and 3 to 7% delta-tocopherol.

6. Composition according to one of claims 1 to 4, wherein the antioxidant additive comprises delta-tocopherol, preferably the antioxidant additive has a delta-tocopherol content by weight of greater than 5%.

7. A composition according to any of the preceding claims, wherein the antioxidant additive content by weight is between 0.01 and 1.5%, preferably between 0.35 and 1.0%.

8. Composition according to one of the preceding claims, in which the sum of the contents by weight of the tocopherols in the antioxidant additive is between 5 and 30%, preferably between 15 and 30%.

9. Composition according to one of the preceding claims comprising a lactone.

10. Use of a composition according to one of the preceding claims for manufacturing a flexible polyurethane foam.
